# EUROPEAN PATENT SPECIFICATION

(11) **EP 3 676 559 B1**
(45) Date of publication and mention of the grant of the patent: **19.07.2023**
(21) Application number: 18852108.2
(22) Date of filing: 30.08.2018
(51) Int. Cl.: F16B 7/18, F16B 39/04, G01B 3/36, G01B 5/25

(54) **METHOD AND ELEVATOR DEVICE FOR INDICATION AND FUNCTION CONTROL OF A SCREW JOINT**
VERFAHREN UND AUFZUGSVORRICHTUNG ZUR ANZEIGE UND FUNKTIONSKONTROLLE EINER SCHRAUBVERBINDUNG
PROCÉDÉ ET DISPOSITIF D'ASCENSEUR D'INDICATION ET DE COMMANDE DE FONCTION D'UN JOINT À VIS

(30) Priority: 30.08.2017 SE 1751038
(43) Date of publication of application: 08.07.2020
(73) Proprietor: Aktiebolaget Ledarskruv, 139 52 Värmdö (SE)
(72) Inventor: GUSTAFSSON, Magnus, 139 51 Värmdö (SE)
(74) Representative: Zacco Sweden AB
(86) International application number: PCT/SE2018/050868
(87) International publication number: WO 2019/045627

(56) References cited:
- WO-A1-2017/078593
- CN-U- 206 160 880
- SE-C2- 539 357
- US-A- 2 789 360
- US-A- 5 746 555
- US-A1- 2016 376 851
- US-B1- 8 375 678

## Description

### TECHNICAL FIELD

The present invention relates to a method of setting a relative angle of rotation between a first and a second threaded rod section according to claim 1.

The description relates to the assembly and joining of threaded rods and relates in particular to the manufacturing industry for elevator devices including linear threaded rods with external threads for driving elevator cages or other industrial applications. The invention further relates to an elevator device with a measuring device according to claim 5. However, although the invention according to claim 5 is limited to an elevator device, claim 1 is not limited to elevator devices, but can also generally relate to the joining of trapezoidal rods, screw rods, spindle rods, etc., which are used in a wide range of industrial segments, applications and transport fields.

### BACKGROUND

Threaded rod sections are joined to each other forming a long threaded rod with one or more external threads. Each threaded rod section comprises at its one end a female portion (hole) with thread and at its other end a male portion (pin) with corresponding thread. A first threaded rod section is joined to a second threaded rod section by screwing. It is important that the threaded rod sections end up in the correct position relative to each other so that in the joint of two joining thread entrances there is no jaw or step in the joint after screwing (joining/mounting). In order to ensure that the thread entrances of the external threads of the threaded rod sections end up in alignment with each other and form a smooth transition, the first threaded rod section is provided with a predetermined mark (index mark exists only on self-inhibiting threads) to coincide with a mark of the second threaded rod section for correct mounting (correct relative angle of rotation is zero).

In order to adjust the relative angle of rotation between the threaded rod sections so that the markings coincide with each other and to ensure a smooth transition between the thread entrances of the external threads, mounting personnel must be very careful at said adjustment so that pins easily can be mounted in transverse through holes of respective male and female portions for locking of the threaded rod sections.

Advantageously, a specific method of manufacture of threaded rod sections provided by the applicant is used, which sections after assembly to each other exhibit even transition between the thread entrances of the external threads. The manufacturing method is described in the Swedish patent application SE 1551426-8 and is developed by the applicant in order to provide cost-efficiently series manufacture of threaded rod sections, each of which fit another threaded rod section independently. Any threaded rod section may be mounted to another threaded rod section with even transition between the thread entrances in the joint and with correct bias (tightening torque).

WO 2017078593A1 describes a measuring device for providing a correct mount between threaded rod sections of an elevator device, wherein the rod sections are prepared to be mounted to each other making use of a measuring rod to be in line with a centre line of transverse holes being in line with each other so that the exterior rod threads are correctly joined.

In order to facilitate assembly personnel to achieve even transition between the thread entrances in the joint and proper tightening torque between the threaded rod sections, the applicant has invented the present device and method for setting a relative angle of rotation between a first and a second threaded rod section for indication and function control determining rotation center.

### SUMMARY OF THE INVENTION

The invention relates to a method for setting a relative angle of rotation between a first and a second threaded rod section at a first joint by means of a measuring device as set out in claim 1 and to an elevator device for driving an elevator cage as set out in claim 5. Preferred aspects of the invention are set out in the dependent claims.

An object of the present invention is to provide that the measurement result not being disturbed when the measurement is performed.

Another object of the present invention is to provide, in particular, that the measurement result not being disturbed when the measurement takes place vertically and at non-self-inhibiting threads.

Non-self-inhibiting threads concern such angle of inclination and tolerance that the measuring device can be moved downward by its own weight along the threaded sections with rotational motion by means of gravity.

A further object is that regardless of whom (assembly personnel) operating the measuring device for indication and function control of the external thread of the joined joint, the same result would always be obtained.

An object of the present invention is that all parameters - correct bias in the joint between two threaded rod sections by correct tightening of a mounting pin in a mounting hole, correct match of the thread entrance of the first threaded rod section in line with the thread entrance of the second threaded rod section, correct mounting of pins, and function control - can be measured/indicated in one and the same instant (the measuring device will always display the same parameters).

An object of the present invention is to safely and time-saving be able to assembly threaded rod sections to each other, which threaded rod sections extend longitudinally axially along a center axis while at the same time the thread entrances of two assembled threaded rod sections end up in line with one another, while a predetermined bias is achieved at the joint.

A further object is to easily rotate a first threaded rod section relative to a second threaded rod section to a suitable relative angle of rotation where the thread entrance of the first threaded rod section matches (being in line with) the thread entrance of the second threaded rod section.

A further object is to accurately join two threaded rod sections, each having at least one thread entrance.

A further object is that an assembler should be able to mount a joint in low light and small visual contact with the joint.

An additional object is to avoid damages to the threaded rod sections and/or pins during fitting and assembly.

An object is also to further develop state-of-the-art technology in the field.

At least one of the above-mentioned objects has been achieved by means of the method defined in the description, characterized by the steps claimed in claim 1.

At least one of the above objects has been provided by a method for setting a relative angle of rotation between a first and a second threaded rod section at a first joint by means of a measuring device, which measuring device exhibits an internal thread corresponding to an external thread of the first and second threaded rod sections, wherein the measuring device in use is moved in axial direction over the first joint in a rotary motion, wherein the method comprises the steps of: mount the measuring device on the first threaded rod section; mount the second threaded rod section to the first threaded rod section; move the measuring device toward the first joint until the internal thread of the measuring device abuts the external thread of the second threaded rod section; rotate the second threaded rod section to a position when a thread entrance of said external thread of the first threaded rod section matches a thread entrance of said external thread of the second threaded rod section, in which position the measuring device can be moved over the joint; lock the first joint; move the measuring device toward a second joint joining the second threaded rod section and a third threaded rod section until the internal thread of the measuring device abuts the external thread of the third threaded rod section.

Preferably, the step of locking the first joint is followed by a displacement of the measuring device in the direction toward the second threaded rod section.

Suitably, the measuring device is moved over the joint by gravity and/or by hand.

Preferably, the step of locking the joint also includes mounting of at least one pin transversely to the axial direction in a corresponding through hole of the respective male and female portions for locking the threaded rod sections to each other.

Suitably, the measuring device is moved over the at least one pin to control correct mounting of the pin.

At least one of the above-mentioned objects has also been achieved by means of the device defined in the introduction, characterized by the features specified in claim 5.

At least one of the above-mentioned objects has also been achieved by an elevator device **<according to the characterizing part of claim** 5.>

Suitably, the measuring device exhibits at least one internal thread having a smaller play vis-a-vis at least one external thread of each threaded rod section than the at least one internal thread of a work nut exhibits vis-à-vis at least one external thread of each threaded rod section.

This ensures that the work nut of for e.g. a cage will never jam (in/over the joint) on the external thread/threads of the threaded rod section.

Preferably, the measuring device exhibits at least one internal thread corresponding to an external thread of the respective first and second threaded rod section.

Suitably, the measuring device exhibits an angle of inclination of the internal thread greater than 5 degrees.

Preferably, the measuring device is assigned a fixing means for fixing or releasing the measuring device from the respective threaded rod section.

Suitably, the second threaded rod section is mounted to the first threaded rod section by mounting the mounting pin into the mounting hole after that the measuring device has been mounted on the first threaded rod section.

Preferably, assembly personnel lock the measuring device at the first threaded rod section by means of a locking screw of the measuring device.

Suitably, the measuring device is moved over the joint by means of gravity.

Preferably, the displacement is performed vertically along vertically disposed threaded rod sections.

Suitably, each threaded rod section exhibits an external thread that can be defined as a non-self-inhibiting thread.

In this manner, an automatic movement of the measuring device is achieved, in which the measuring device rotates and advances in the direction downwards by means of gravity.

In one aspect, the measuring device is moved over the joint by rotation by means of hand force along horizontally disposed threaded rod sections.

Suitably, each threaded rod section exhibits an external thread that can be defined as a self-inhibiting thread.

The work nut can be defined as a drive nut, standard nut, elevator drive nut etc.

Suitably, the internal thread of the measuring device exhibits a play that is approximately one third of the standard nut (work nut) tolerance (play) vis-à-vis the external thread of each threaded rod section.

In this manner, the measuring device detects and measures all dimensions of the external thread of the joint at the same time and ensures that the work nut never would jam over the joint.

In addition to automatic examination of the joint, the measuring device is further able to, in case assembly personnel tighten the joint too much, the internal thread of the measuring device will stuck on the joint and cannot be moved over the joint. This gives an indication to the assembly personnel that the joint not being properly mounted and the assembly personnel are instructed by this indication to loosen the tightening torque of the joint until the measuring device again can be moved over the joint.

In this way, a measuring device has been provided that is easy to use by assembly personnel and that at the same time provides a precise alignment of the joint of the first and second threaded rod sections.

By means of the exact fitting, a predetermined bias of the screw joint is provided.

Preferably, the threaded rod sections extends longitudinally, axially along a center axis.

Preferably, the mounting pin is provided with a first transverse hole extending transversely to the center axis.

Preferably, a portion of the one end of the second threaded rod section, constituting said mounting hole, is provided with a second transverse hole. Said second transverse hole also extends transversely to the central axis and is intersected transversely by said mounting hole.

Preferably, the mounting pin and mounting hole respectively comprises each other mating threads and the first and second transverse holes are so arranged that upon assembly and adjustment of the relative angle of rotation, a standardized bias being achieved in the joint while providing an exact fit.

Thus, the joint of the external thread of the threaded rod section exhibits a thread entrance that will match a thread entrance of a corresponding joined threaded rod section at the correct relative angle of rotation.

The joint end of the threaded rod section may exhibit several threaded grooves with multiple thread entrances facing several corresponding thread entrances of a joined threaded rod section. By the present invention, when assembling the threaded rod sections to each other, great accuracy can be achieved regarding the matching thread entrances at the joint.

This ensures that the entrances of the threaded grooves of the threaded rod sections end up in the correct position relative to each other and face each other and form an even transition.

Preferably, after driving, the pins exhibit deformations locking the pins to the threaded rod sections.

Preferably, a deformation zone is provided on the mantle surface of the pins in the interface between mounting pins and mounting holes when the pins are driven. In this way there is provided a locked joint, which is secured against undesired rotational movement of the threaded rod sections relative to each other.

Thus, in order to achieve a predetermined bias in the screw joint, the transverse holes must be in line with each other.

In the case of vertically extending threaded rod sections, the weight of the measuring device and the gravity is used for making the movement of the measuring device over the joint. In this manner it is achieved an unaffected and predetermined rotation over the joint, wherein great accuracy can be achieved with regard to different parameters such as tolerances in the joint, deformations, functionality, position of the pins, thread pitch etc.

In the case of horizontally extending threaded rod sections, rotation and movement of the measuring device takes place by hand of the assembler. In this manner, an uneffected and predetermined rotation over the joint is achieved wherein great accuracy being achieved with regard to various parameters such as tolerances in the joint, deformations, functionality, position of the pins, thread pitch etc.

A thread is defined as a three-dimensional, helical structure designed to transform a rotary motion into a linear motion.

The travel of the measuring device after one revolution can be called a thread pitch.

The joint between a first and second threaded rod section can be called a screw joint.

Preferably, after the assembly of the threaded rod sections, a work nut is to be used to drive an apparatus, such as an elevator cage, upon rotation of the assembled threaded rod. The work nut exhibits internal threads that fit the external threads of the threaded rod sections.

Suitably, the measuring device exhibits an internal thread, which has a smaller play vis-a-vis the external thread of the threaded rod sections than the internal thread of a work nut vis-a-vis said external thread.

Preferably, the inclination angle of the thread relative to the thread diameter is sufficient enough to provide the automatic movement of the measuring device by means of gravity.

Preferably, the inclination angle is more than about 5 degrees, wherein the thread is non-self-inhibiting.

Preferably, the inclination angle is below about 5 degrees, wherein the thread is self-inhibiting.

A non-self-inhibiting thread means that e.g. a device, threaded on the threaded rod, or other element (measuring device), of its own weight is rotated and moved downwards by means of gravity.

A self-inhibiting thread means that e.g. a device, threaded on the threaded rod, or other element (measuring device), of its own weight not being rotated and moved downwards by means of gravity.

The work nut can be defined as a drive nut, standard nut, elevator drive nut etc.

The relative angle of rotation between the first threaded rod section and the second threaded rod section is defined below: A first imaginary line intersects the first thread entrance (its median point) and the center axis and extends radially outward from the center axis and perpendicular to the center axis. A second imaginary line intersects the second thread entrance (its center point) and the center axis and extends radially outward from the center axis and perpendicular to the center axis. The first and second imaginary lines limit an area of a plane (which extends perpendicular to the center axis) forming the relative angle of rotation. When the first and second imaginary lines are aligned, the relative angle of rotation is zero, where the first thread entrance matches the second thread entrance (aligned).

The invention is not limited to the above-mentioned examples. There are several different modifications and combinations of the examples, which will be apparent to those skilled in the art to apply within the scope of the invention.

For example, for horizontal movement of the measuring device (hand power) and for vertical movement of self-inhibiting thread (by hand), the measurement is slightly affected and mounting/measurement must be done with high accuracy.

For vertical movement and non-self-inhibited thread (gravity/weight), the measurement will be unaffected and will occur automatically.

### FIGURE SUMMARY

The invention will now be explained with reference to the drawings, on which schematic:
Fig. 1a depicts three threaded rod sections for joining;
Fig. 1b illustrates a joined thread screw for elevator;
Fig. 2a shows a joint end with a male portion and a joint end with a female portion;
Fig. 2b illustrates in a first side view the joint ends in Fig. 2a joined together;
Fig. 2c illustrates in a second side view the joint ends in Fig. 2a joined together;
Fig. 2d shows a cross section of a screw joint;
Fig. 3 shows a joint end with multiple thread entrances;
Fig. 4a shows a joint end more in detail;
Fig. 4b shows the joint end with a measuring device according to a first example of the invention;
Fig. 4c shows a position in which the measuring device engages a second threaded rod section prior correct tightening;
Fig. 5 shows a measuring device according to a second example of the invention;
Fig. 6 shows a portion of a measuring device according to a third example resting on a second threaded rod section before tightening;
Fig. 7 shows the measuring device in Fig. 6 being moved over the joint when a second threaded rod section has been tightened into the correct position relative to a first threaded rod section, where the relative angle of rotation is zero;
Fig. 8 shows a measuring device according to a fourth example of the invention;
Fig. 9 shows a measuring device according to a fifth example of the invention;
Figs. 10a-10h show an example of a method according to the invention for setting a relative angle of rotation as well as indication and function control of a screw joint;
Fig. 11 shows a method of setting a relative angle of rotation between a first and a second threaded rod section at a first joint by means of a measuring device according to a further example;
Fig. 12 shows a method of setting a relative angle of rotation between a first and a second threaded rod section at a first joint by means of a measuring device according to a further example; and
Figs. 13a-13c show the definition of a relative angle of rotation between a first and a second threaded rod section.

### DETAILED DESCRIPTION OF EMBODIMENTS

The invention will now be explained by way of examples. Details of the schematic drawings may occur showing the same type of detail but in different figures with the same reference numeral. The drawings need not to be strictly interpreted, and details, which are not important to the invention have been excluded from these for the sake of clarity.

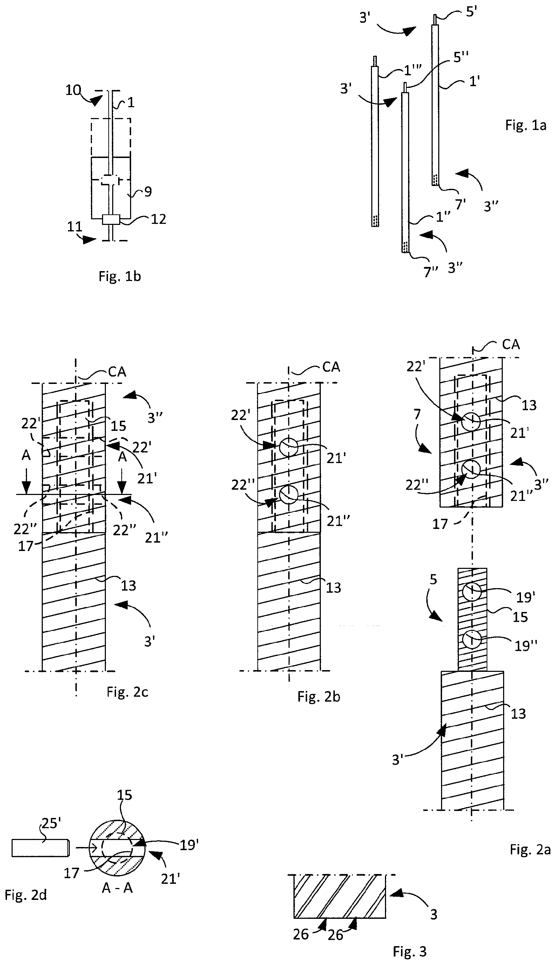

Fig. 1a shows three threaded rod sections 1', 1", 1‴ for assembly. A first threaded rod section 1' comprises a first joint end 3' having a first male portion 5' and a second joint end 3" having a first female portion 7'. A second threaded rod section 1" also includes a first joint end 3' having a second male portion 5" and a second joint end 3" having a second female portion 7".

Fig. 1b shows a joined threaded rod 1 for driving an elevator cage 9. The threaded rod 1 is fixedly mounted at its upper end 10 and freely suspended at its lower end 11. A work nut 12 is provided at the cage 9. The work nut has internal threads that fit the external threads of the threaded rod 1.

Fig. 2a shows a first joint end 3' with a male portion 5 and a second joint end 3" with a female portion 7 of respective threaded rod section 1', 1" extending along a center axis CA. The respective external side of the threaded rod sections 1', 1" is arranged with a set of trapezoidal threads 13. The male portion 5 comprises a threaded mounting pin 15. The female portion 7 comprises a threaded mounting hole 17, the thread inclination of which corresponds to that of the mounting pin 15. A first 19' and second 19" transverse hole being provided in the mounting pin 15. The female portion 7 comprises, on both sides of the mounting hole 17, a first hole set 21' comprising two through holes 22' in alignment with each other and on both sides of the mounting hole 17 (seen in the transverse direction relative to the center axis CA). The female portion 7 comprises on both sides of the mounting hole 17 a second hole set 21" comprising two through holes 22" in alignment with each other and on both sides of the mounting hole 17 (seen in the transverse direction relative to the center axis CA). The first transverse hole 19' is accommodated in the mounting pin 15 in such a manner that it is aligned with the first hole set 21' of the female portion 7 with such orientation that the entrance of each trapezoidal thread 13 of the first joint end 3' is in the correct position relative the entrance of the corresponding trapezoidal thread 13 of the second joint end 3", which orientation of the first transverse hole 19' and the first hole set 21' (in line with each other) also determines a predetermined bias of the mounted screw joint. The threaded mounting pin 15 and corresponding threaded mounting hole 17 exhibit such thread entrances that said first transverse holes 19' and the first hole set 21' end up in alignment with each other at complete and correct assembly. The second transverse hole 19" and the second hole set 21" are defined in the same way. That is, the second transverse hole 19" and the second hole set 21" extend parallel with the first transverse hole 19' and the first hole set 21'.

Fig. 2b is a side view of the join ends 3', 3", which is rotated in the locking position. The first 19' and the second 19" transverse hole and the first 21' and the second 21" hole set are in the correct position relative to each other.

Fig. 2c shows the joint ends 3', 3" in a side view, in which view the cut A-A is taken.

Fig. 2d shows the cut A-A in Fig. 2c. A first pin 25' is driven into the first transverse hole 19' and the first hole set 21' whereby thickening (not shown) is formed in the interface between the mounting pin 15 and mounting hole 17 for locking the joint. A second pin (not shown) is driven in a similar way through the second transverse hole and the second hole set.

Fig. 3 shows a joint end 3 with multiple thread entrances 26. Such a joint end 3 with multiple thread entrances 26 requires accuracy when setting the relative rotation of a first and a second threaded rod section so that corresponding thread entrances 26 end up against each other.

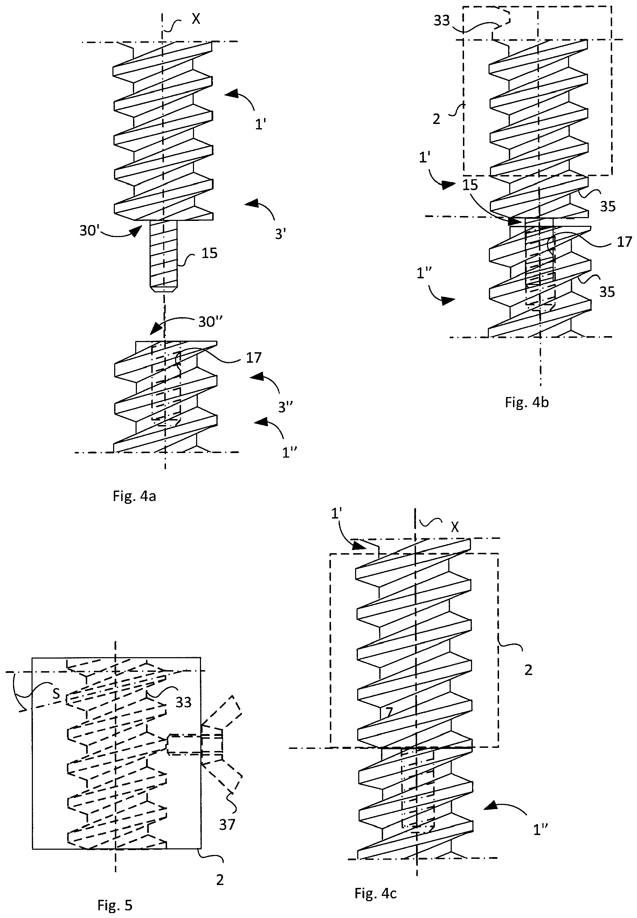

Fig. 4a shows a joint end more in detail. A first 1' and a second 1" threaded rod section are arranged to be screwed to each other to form a joint 28. The first threaded rod section 1' is provided with a first joint end 3' having a mounting pin 15. The mounting pin 15 extends in the direction of a central axis X. The mounting pin 15 is provided with an external thread. The second threaded rod section 1" is provided with a second joint end 3" having a mounting hole 17 extending in the direction of the central axis X. The mounting hole 17 internally has a thread corresponding to the thread of the mounting pin 15. When mounting the second threaded rod section 1" to the first threaded rod section 1', the mounting pin 15 is rotated into the mounting hole 17 to a position where the thread entrance 30' of the first threaded rod section matches (in line with) the thread entrance 30" of the second threaded rod section 1".

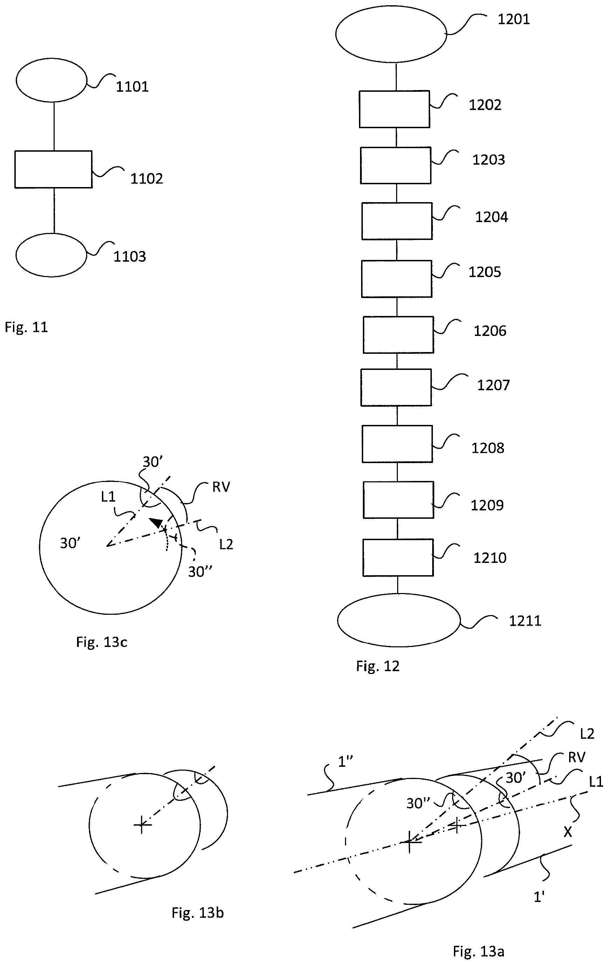

Fig. 4b shows the first joint end 3' with a mounted measuring device 2 (broken line) according to a first example of the invention. The measuring device 2 is configured to set a relative angle of rotation RV (see Fig. 13) between the first 1' and the second 1" threaded rod section at the joint 28. The measuring device 2 has an internal thread 33 corresponding to an external thread 35 of the respective first 1' and second 1" threaded rod section. The measuring device 2 initially has been screwed onto the lower end of the first threaded rod section 1'.

Preferably, the second threaded rod section 1" is mounted to the first threaded rod section 1' by threading the mounting pin 15 into the mounting hole 17 after that the measuring device 2 has been mounted on the first threaded rod section 1'.

Suitably, assembly personnel (not shown) lock the measuring device 2 at the first threaded rod section 1' by means of a locking screw (not shown) of the measuring device 2.

Preferably, the assembly personnel fasten the second threaded rod section 1" at the first threaded rod section 1' by hand to a position shown in Fig. 4c, wherein the measuring device 2 is allowed to move downwardly with a rotational motion, which movement takes place by means of the gravity force, which affects the measuring device 2.

Fig. 4c shows how the measuring device 2 stops it's movement downward when the measuring device 2 abuts the thread entrance of the second threaded rod section 1" (i.e., the relative angle of rotation is not correct).

Preferably, subsequently a tightening torque is required by means of tightening tools (not shown).

Assembly personnel apply a tightening tool, preferably an upper clamping lever (not shown), on the first threaded rod section 1, and a lower clamping lever (not shown) on the second threaded section 1" for tightening.

Fig. 5 shows a measuring device 2 according to a second example of the invention. The measuring device 2 has an internal thread 33, which has a smaller play vis-a-vis the external thread 35 of the threaded rod sections 1', 1", than the internal thread of the work nut (see Fig. 1b) has vis-a-vis the external thread 35. The work nut may be defined as a drive nut, standard nut, elevator drive nut, etc. A locking screw 37 is arranged to the measuring device 2 for temporary locking the measuring device 2 to any threaded rod section 1', 1".

The measuring device 2 preferably exhibits an inclination angle S of the internal thread 33 which is greater than 5 degrees.

An inclination angle more than about 5° may correspond to non-self-inhibiting thread.

An inclination angle less than about 5° may correspond to self-inhibiting thread.

However, there is a "grey area" at about 3, 5° - 5°, where different factors, such as lubrication for example, determine whether the thread is self-inhibiting or non-self-inhibiting.

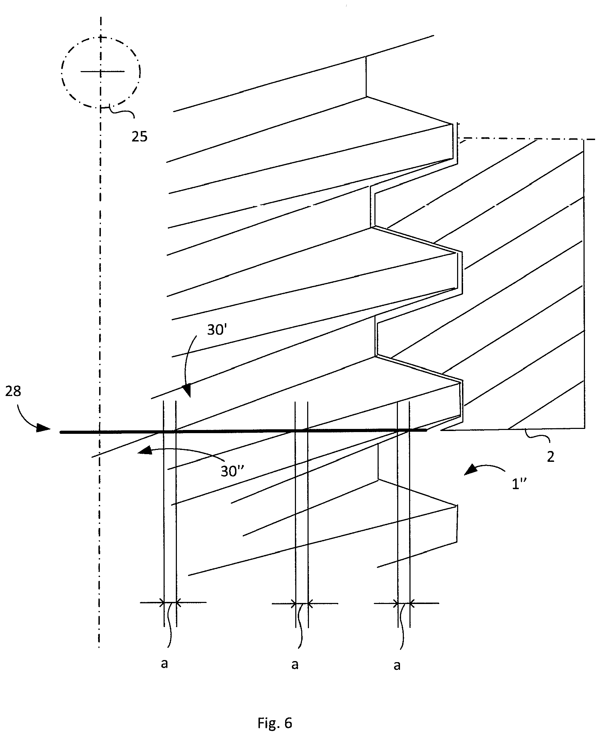

Fig. 6 shows, according to a third example, a portion of a measuring device 2 that abuts a non-matching thread entrance 30" of a second threaded rod section 1" prior to tightening. The thread entrance 30' of the first threaded rod section 1' does not yet match the thread entrance 30" of the second threaded rod section 1" (loose tightening). The second threaded rod section 1" has to be tightened further so that a distance a is reduced to an absent distance.

Preferably, when assembly personnel tighten the second threaded rod section 1" so that the distance a is equal to zero (a = 0), this is indicated for the assembly personnel by moving the measuring device 2 past the joint 28 and without difficulty rotating over ("past downward") the joint 28 to the second threaded rod section 1". At the same time, the assembly personnel have achieved a function check of the joint 28. Assembly personnel can then mount pins 25 at the joint 28 through the mounting pin and mounting hole. As a further function check, the assembly personnel can rotate the measuring device 2 back over the joint 28 for indication that the pins 25 are correctly mounted.

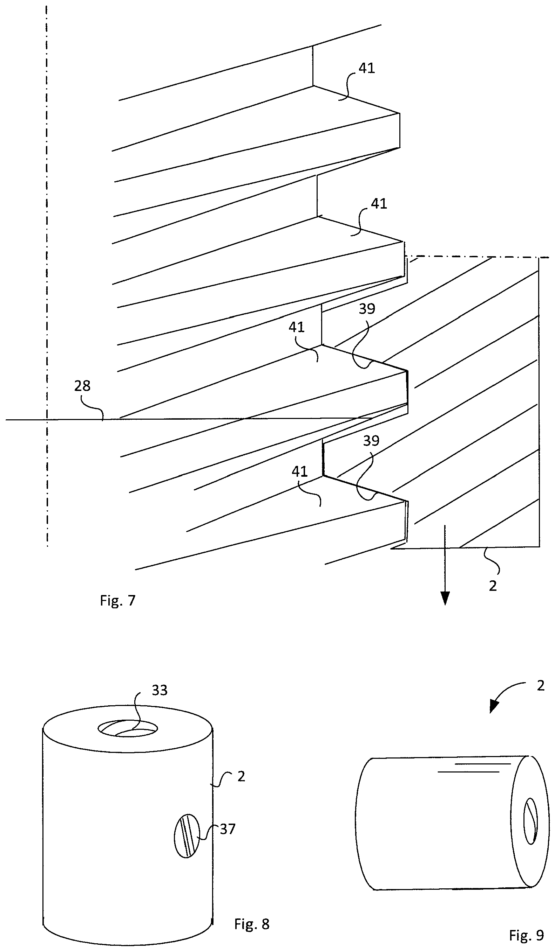

Fig. 7 shows the measurement device 2 more in detail when moving the measuring device 2 over a joint 28. Movement takes place by means of the gravity force, which affects the measuring device 2 downwards. The tolerance is shown exaggerated to illustrate the internal thread 33 of the measurement device 2. It is shown that the inner thread 33 of the measurement device 2 abuts its lower flanks 39 against the upper flanks 41 of the external thread 35 of the threaded rod sections 1', 1".

Suitably, the inclination angle of the thread is large enough (preferably greater than 5 degrees) to provide the automatic movement of the measuring device 2 by means of gravity.

Fig. 8 shows a measurement device 2 according to a fourth example of the invention. The measuring device 2 is configured for indication and function control of screw joints with vertically extending threaded rod sections (not shown). The measuring device 2 exhibits a weight of about 3-5 kg and is preferably manufactured in lead bronze. A locking screw 37 of the measuring device 2 is provided for temporary locking the measuring device 2 at any threaded rod section. The measuring device 2 has an internal thread 33, which has a smaller play vis-a-vis the external thread of each threaded rod section than the internal thread of a work nut (see Fig. 1b) has vis-à-vis the external thread of each threaded rod section. The measuring device 2 exhibits at least one or more thread entrances of internal threads corresponding to one or more thread entrances of external threads of each threaded rod section.

Fig. 9 shows a measurement device 2 according to a fifth example of the invention. The measuring device 2 is configured for indication and function control of screw joints of horizontal and/or threaded rod sections extending in a sloping plane. The measuring device 2 may comprise a locking device (not shown) for locking the measuring device 2 at a threaded section. The measuring device 2 is moved over the joint by hand.

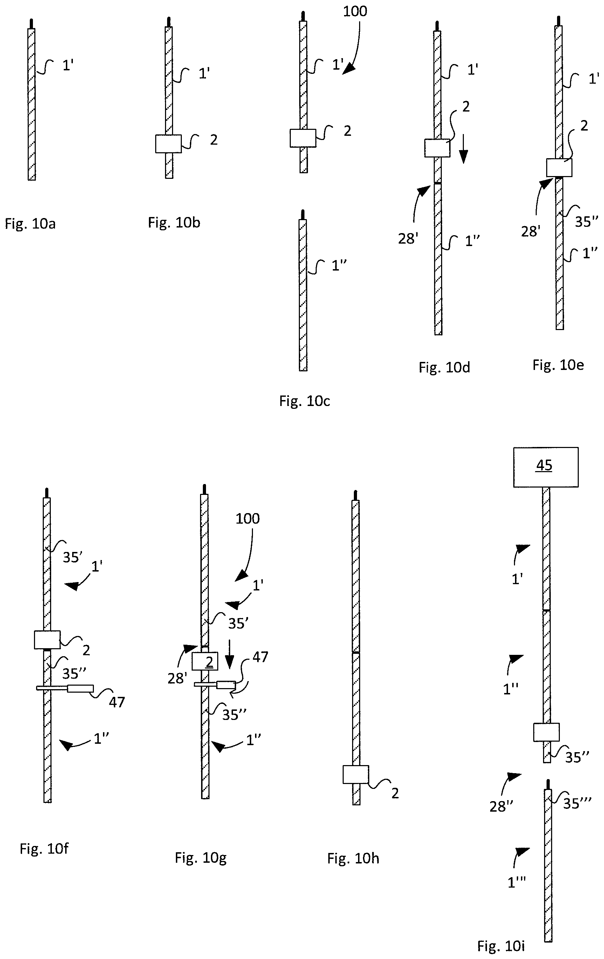

Figs. 10a-10h illustrate an example of a method and a device 100 according to the invention for indication and function control of a first and second joint (screw joint). The method is provided for setting a relative angle of rotation between a first 1' and a second 1" threaded rod section at a first joint 28' by means of a measuring device 2, which measuring device 2 has an internal thread corresponding to an external thread of the first 1' and the second 1" threaded rod section. The measuring device 2 is moved during use in axial direction over the first joint 28' in rotating motion. The method comprises the steps of firstly mounting a first threaded rod section 1' to e.g. a suspension nut 45 (see Fig.10i) according to Fig.10a.

In Fig.10b, the step of mounting the measuring device 2 on the first threaded rod section 1' is shown, preferably by threading the measuring device 2 onto the lower part of the first threaded rod section 1 and then locking it at the first threaded rod section 1'.

In Fig. 10c is shown the step of mounting the second threaded rod section 1" to the first threaded rod section 1'. In Fig.10d is shown the step of releasing and moving the measuring device 2 in the direction toward the first joint 28'. In Fig. 10e is shown the step of moving the measuring device 2, with rotating motion (spiral motion), in direction toward the first joint 28' until the internal thread of the measuring device 2 abuts the external thread 35" of the second threaded rod section 1".

In Fig. 10f is shown the step of preparing rotation of the second threaded rod section 1" relative to the first threaded rod section 1' so that a threaded entrance of the external thread 35' of the first threaded rod section 1' matches a threaded entrance of the external thread 35" of the second threaded rod section 1".

Preferably, a clamping pliers 47 is mounted on the second threaded rod section 1" so that assembly personnel can rotate the second threaded rod section 1" in the correct position relative to the first threaded rod section 1".

In Fig. 10g, the assembler (not shown) turns the second threaded rod section 1" of the device 100 relative to the first threaded rod section 1' to a position such that a threaded entrance of the external thread 35' of the first threaded rod section 1' matches a threaded entrance of the external thread 35 " of the second threaded rod section 1", in which position the measuring device 2 of the device 100 is moved over the first joint 28' and thus indicates that the first joint 28' is correctly tightened and the thread entrances of the respective threaded rod section 1', 1" match each other.

Figs. 10h-10i show how the measuring device 2 is moved in the direction toward a second joint 28" between the second threaded rod section 1" and a third threaded rod section 1‴. The procedure is repeated according to the methodology shown in Figs. 10d-10e, after which the internal thread of the measuring device 2 abuts the external thread of the third threaded rod section 1‴. Thereafter, the procedure of Figs. 10f-10g is repeated, but as applied to the second joint 28 ", wherein the third threaded rod section 1‴ is rotated to the correct position relative to the second threaded rod section 1". Thus, the assembler rotates the third threaded rod section 1‴ relative to the second threaded rod section 1" to a position such that a thread entrance of the external thread of the second threaded rod section 1" matches a threaded entrance of the third threaded rod section 1‴, in which position the measuring device 2 is moved over the second joint 28" and thus indicates that the second joint 28" is properly tightened and the thread entrances of the respective threaded rod sections 1", 1‴ match each other.

The threaded rod sections shown in Figs. 10a-10i may be mounted vertically or may be mounted in the horizontal direction.

In the case of vertically extending non-self-inhibiting threaded rod sections, the self-weight of the gauge 2 and the force of gravity is utilized for the motion over the joint. In this manner, an unaffected and predetermined rotation over the joint is achieved, wherein great accuracy being achieved with regard to various parameters such as, tolerances in the joint, deformations, functionality, the position of the pins, thread pitch etc.

In the case of threaded rod sections extending horizontally, rotation and movement of the measuring device 2 takes place by means of hand of the assembler.

Fig. 11 illustrates an exemplary method of setting a relative angle of rotation between a first and a second threaded rod section at a first joint by means of a measuring device, which measuring device has an internal thread corresponding to an external thread of the first and second threaded rod section, wherein the measuring device when used, is moved axially over the joint in a rotating motion.

The method starts at step 1101. The method involves setting a relative angle of rotation between a first and a second threaded rod section using the procedure marked at 1102. The method terminates at step 1103.

Preferably, the procedure 1102 comprises the steps of mounting the measuring device 2 on the first threaded rod section; mount the second threaded rod section to the first threaded rod section; move the measuring device in the direction toward the first joint until the internal thread of the measuring device engages the external thread of the second threaded rod section; rotate the second threaded rod section to a position in which a thread entrance of said external thread of the first threaded rod section matches a thread entrance of said external thread of the second threaded rod section, in which position the measuring device can be moved over the joint; lock the first joint; move the measuring device towards a second joint between the second threaded rod section and a third threaded rod section until the internal thread of the measuring device abuts the external thread of the third threaded rod section.

Fig. 12 shows an exemplary method of setting a relative angle of rotation between a first and a second threaded rod section at a first joint by means of a measuring device according to a further example. The measuring device has an internal thread corresponding to an external thread of the first and second threaded rod sections, wherein the measuring device when used is moved in axial direction over the joint in a rotating motion. The method starts at 1201. At step 1202, the measuring device is mounted on the first threaded rod section. At step 1203, the measurement device is locked at the first threaded rod section. At step 1204, the second threaded rod section is mounted to the first threaded rod section. At step 1205, the measuring device is moved in the direction toward the first joint until the internal thread of the measuring device abuts the external thread of the second threaded rod section. At step 1206, the second threaded rod section is rotated to a position in which a thread entrance of said external thread of the first threaded rod section matches a thread entrance of said external thread of the second threaded rod section, in which position the measuring device can be moved over the joint. At step 1206, the measuring device is moved over the joint by gravity and/or by hand. At step 1207, the first joint is locked by mounting at least one pin mounted across the axial direction at the first joint. At step 1208, the measuring device is moved over the at least one pin for control of correct mounting of the pin. At step 1209, the measuring device is moved towards a second joint connected to the second threaded rod section and a third threaded rod section. The procedure is repeated for the second joint as for the first joint at step 1210. At step 1211 the method terminates.

Alternatively, the method may show the following steps a-h:
a) The measuring device is mounted above the joint, that is, on the first threaded rod section;
b) the measuring device is fixed to the first threaded rod section with fixing means (fixing screw) that prevents rotation;
c) the subsequent (in axial direction and adjacent) second threaded rod section is mounted by hand at the lower part of the first threaded rod section, wherein the measuring device remains on the first threaded rod section in a position above the joint (the joint between the first and second threaded rod sections);
d) the measuring device is released from its fixation and is allowed to move toward the joint and stops at the joint not yet drawn in exact position;
e) an upper rotary pliers (clamping pliers) is applied to the first threaded rod section over the measuring device and a lower rotary pliers (clamping pliers) is applied to the second threaded rod section below the measuring device;
f) the lower rotary tong is rotated by hand for providing tightening the second threaded rod section to the first threaded rod section to a correct rotational position (the thread entrance of the first threaded rod section matches - is in line with - the thread entrance of the second threaded rod section), whereby the measuring device is moved over the joint by means of the gravity, which automatically occurs in said rotational position, since the joint being exact assembled and the thread pitch error over the joint is minimized to a few hundredths;
g) when the joint is precisely tightened, the joint is locked against rotation by means of pins;
h) the measuring device is moved to a lower portion of the second threaded rod section and is again fixed with the fixing screw, wherein a third threaded rod section can be mounted according to the method steps a) to g).

The method is suitably carried out at a device comprising a measuring device, and a first and a second threaded rod section which is arranged to be screwed to each other to form a joint, the first threaded rod section being provided with a first joint end having a mounting pin extending in the center axis direction, wherein the mounting pin is provided with an external thread and the second threaded rod section is provided with a second joint end having a mounting hole extending in the center axis direction, the mounting hole has an internal thread corresponding to the thread of the mounting pin. The measuring device preferably has an internal thread, which has a smaller play vis-a-vis the external thread of each threaded rod section than the internal thread of a work nut vis-a-vis the external thread of each threaded rod section.

This ensures that the working nut of e.g. an elevator cage will never jam over the joint.

Figs. 13a-13c show the definition of relative angle of rotation between a first and a second threaded rod section. Fig. 13a shows a first and a second threaded rod section 1', 1" in a perspective view. A first thread entrance 30' is not yet aligned with a second thread entrance 30". A first imaginary line L1 intersects the first thread entrance 30' and the center axis X and extends radially outwardly from the center axis X and perpendicular to the center axis X. A second imaginary line L2 intersects the second thread entrance 30" and the center axis X and extends radially outwardly from the center axis X and perpendicular to the center axis X. The first and second imaginary lines L1 and L2 limit an area of a plane (which extends perpendicular to the center axis X) giving the relative angle of rotation RV. When the first and second imaginary lines L1 and L2 are in line with each other, the relative rotational angle RV is zero, wherein the first thread entrance 30' matches the second thread entrance 30" (in line with each other) as shown in Fig. 13b. This is shown more clearly in Fig. 13c in a cross section of the first threaded rod section 30'. A solid line shows the first thread entrance 30'. A dotted line shows the second thread entrance 30" of the second threaded rod section (obscured).

The invention is not limited to the above-mentioned example. There are several different modifications and combinations of the examples, which will be apparent to those skilled in the art to apply within the scope of the invention and defined by the wording of the claims.

## Claims

1. A method for setting a relative angle of rotation (RV) between a first and a second threaded rod section (1', 1") at a first joint (28') by means of a measuring device (2), which measuring device (2) exhibits an internal thread (33) corresponding to a first and a second external thread (35', 35") of the first and second threaded rod sections (1', 1"), wherein the measuring device (2) in use is moved in axial direction (X) over the first joint (28') in a rotary motion, **the method comprising the steps of:**
- mount the measuring device (2) on the first threaded rod section (1');
- mount the second threaded rod section (1") to the first threaded rod section (1');
- move the measuring device (2) toward the first joint (28 ') until the internal thread (33) of the measuring device (2) abuts the second external thread (35") of the second threaded rod section (1");
- rotate the second threaded rod section (1") to a position when a first thread entrance (30') of said first external thread (35') of the first threaded rod section (1') matches a second thread entrance (30") of said second external thread (35") of the second threaded rod section (1"), in which position the measuring device (2) can be moved over the first joint (28');
- lock the first joint (28');
- move the measuring device (2) toward a second joint (28") between the second threaded rod section (1") and a third threaded rod section (1‴).

2. The method according to claim 1, wherein the step of locking the first joint (28') is followed by a movement of the measuring device (2) toward the second threaded rod section (1").

3. The method according to claim 1 or 2, wherein the measuring device (2) is moved over the first joint (28') by gravity and/or by hand.

4. The method according to any of claims 1 to 3, wherein the step of locking the first joint (28') comprises mounting at least one pin (25) extending transverse the axial direction (X) in a corresponding through hole of a respective male and female portion (5, 7) for locking the threaded rod sections (1', 1") to each other.

5. An elevator device (100) for driving an elevator cage (9), which elevator device (100) comprises;
- an elevator drive nut (12);
- a measuring device (2);
- a first and a second threaded rod section (1', 1") arranged to be screwed to each other forming a joint (28);
- the first threaded rod section (1') being provided with a first joint end (3') exhibiting a mounting pin (15) extending in the direction of the center axis (X),
- the mounting pin (15) is provided with an external thread and the second threaded rod section (1") is provided with a second joint end (3") exhibiting a mounting hole (17) extending in the direction of the center axis (X); and
- the mounting hole (17) internally exhibits a thread corresponding with that of the mounting pin (15);
**characterized in that**
- the measuring device (2) exhibits an internal thread (33) exhibiting a smaller play vis-a-vis the external thread (35) of each threaded rod section (1', 1") than the internal thread of the elevator drive nut (12) exhibits vis-a-vis the external thread (35) of each threaded rod section (1', 1"); wherein
- each threaded rod section (1', 1") exhibits an external thread that can be defined as a non-self-inhibiting thread having such angle of inclination and tolerance that the measuring device (2) can be moved downward by its own weight along the threaded rod sections (1', 1") with rotational motion by means of gravity.

6. The device (100) according to claim 5, wherein the measuring device (2) exhibits at least one or more thread entrances corresponding to one or more external threads (35) of the respective first and second threaded rod section (1', 1").

7. The device (100) according to claim 5 or 6, wherein the measuring device (2) exhibits an angle of inclination (S) of the internal thread (33) greater than 5 degrees.

8. The device (100) according to any one of claims 5 to 7, wherein the measuring device (2) comprises a fixing means (37) configured to fixate or release the measuring device (2) from the respective threaded rod section (1', 1").

## Patentansprüche

1. Verfahren zum Einstellen eines relativen Drehwinkels (RV) zwischen einem ersten und einem zweiten Gewindestangenabschnitt (1', 1") an einer ersten Verbindung (28') mittels einer Messvorrichtung (2), wobei die Messvorrichtung (2) ein Innengewinde (33) aufweist, das einem ersten und einem zweiten Außengewinde (35', 35") des ersten und des zweiten Gewindestangenabschnitts (1', 1") entspricht, wobei die Messvorrichtung (2) im Gebrauch in axialer Richtung (X) über die erste Verbindung (28') in einer Drehbewegung bewegt wird, wobei das Verfahren die folgenden Schritte umfasst:
- Anbringen der Messeinrichtung (2) an dem ersten Gewindestangenabschnitt (1');
- Anbringen des zweiten Gewindestangenabschnitts (1") an dem ersten Gewindestangenabschnitt (1');
- Bewegen der Messvorrichtung (2) in Richtung der ersten Verbindung (28'), bis das Innengewinde (33) der Messvorrichtung (2) an dem zweiten Außengewinde (35") des zweiten Gewindestangenabschnitts (1") anliegt;
- Drehen des zweiten Gewindestangenabschnitts (1") in eine Position, in der ein erster Gewindeeingang (30') des ersten Außengewindes (35') des ersten Gewindestangenabschnitts (1') mit einem zweiten Gewindeeingang (30") des zweiten Außengewindes (35") des zweiten Gewindestangenabschnitts (1") übereinstimmt, wobei in der Position die Messeinrichtung (2) über die erste Verbindung (28') bewegt werden kann;
- Verriegeln der ersten Verbindung (28');
- Bewegen der Messvorrichtung (2) in Richtung einer zweiten Verbindung (28") zwischen dem zweiten Gewindestangenabschnitt (1") und einem dritten Gewindestangenabschnitt (1‴).

2. Verfahren nach Anspruch 1, wobei dem Schritt des Verriegelns der ersten Verbindung (28') eine Bewegung der Messvorrichtung (2) in Richtung des zweiten Gewindestangenabschnitts (1") folgt.

3. Verfahren nach Anspruch 1 oder 2, wobei die Messvorrichtung (2) durch Schwerkraft und/oder von Hand über die erste Verbindung (28') bewegt wird.

4. Verfahren nach einem der Ansprüche 1 bis 3, wobei der Schritt des Verriegelns der ersten Verbindung (28') Anbringen mindestens eines Zapfens (25) umfasst, der sich quer zu der axialen Richtung (X) in einem entsprechenden Durchgangsloch eines jeweiligen männlichen und weiblichen Teilbereichs (5, 7) erstreckt, um die Gewindestangenabschnitte (1', 1'') miteinander zu verriegeln.

5. Aufzugsvorrichtung (100) zum Antreiben eines Aufzugskorbs (9), wobei die Aufzugsvorrichtung (100) Folgendes umfasst:
- eine Aufzugsantriebsmutter (12);
- eine Messvorrichtung (2);
- einen ersten und einen zweiten Gewindestangenabschnitt (1', 1''), die dazu angeordnet sind, miteinander verschraubt zu werden und eine Verbindung (28) zu bilden;
- der erste Gewindestangenabschnitt (1') ist mit einem ersten Verbindungsende (3') versehen, das einen Befestigungszapfen (15) aufweist, der sich in Richtung der Mittelachse (X) erstreckt,
- der Befestigungszapfen (15) ist mit einem Außengewinde versehen und der zweite Gewindestangenabschnitt (1") ist mit einem zweiten Verbindungsende (3") versehen, das eine Befestigungsbohrung (17) aufweist, die sich in die Richtung der Mittelachse (X) erstreckt; und
- die Befestigungsbohrung (17) weist innen ein Gewinde auf, das dem des Befestigungszapfen (15) entspricht;
**dadurch gekennzeichnet, dass**
- die Messvorrichtung (2) ein Innengewinde (33) aufweist, das gegenüber dem Außengewinde (35) jedes Gewindestangenabschnitts (1', 1") ein geringeres Spiel aufweist als das Innengewinde der Aufzugsantriebsmutter (12) gegenüber dem Außengewinde (35) jedes Gewindestangenabschnitts (1', 1''); wobei
- jeder Gewindestangenabschnitt (1', 1") ein Außengewinde aufweist, das als ein nicht selbsthemmendes Gewinde mit einem derartigen Neigungswinkel und einer derartigen Toleranz definiert werden kann, dass die Messvorrichtung (2) durch ihr Eigengewicht entlang der Gewindestangenabschnitte (1', 1") mit Drehbewegung mittels Schwerkraft nach unten bewegt werden kann.

6. Vorrichtung (100) nach Anspruch 5, wobei die Messvorrichtung (2) mindestens einen oder mehrere Gewindeeingänge aufweist, die einem oder mehreren Außengewinden (35) des jeweiligen ersten und zweiten Gewindestangenabschnitts (1', 1'') entsprechen.

7. Vorrichtung (100) nach Anspruch 5 oder 6, wobei die Messvorrichtung (2) einen Neigungswinkel (S) des Innengewindes (33) von mehr als 5 Grad aufweist.

8. Vorrichtung (100) nach einem der Ansprüche 5 bis 7, wobei die Messvorrichtung (2) ein Befestigungsmittel (37) umfasst, das dazu konfiguriert ist, die Messvorrichtung (2) zu fixieren oder von dem jeweiligen Gewindestangenabschnitt (1', 1") zu lösen.

## Revendications

1. Procédé de réglage d'un angle de rotation relatif (RV) entre une première et une seconde section de tige filetée (1', 1") au niveau d'un premier joint (28') au moyen d'un dispositif de mesure (2), lequel dispositif de mesure (2) présente un filetage intérieur (33) correspondant à un premier et un second filetages extérieurs (35', 35") des première et deuxième sections de tige filetée (1', 1"), dans lequel le dispositif de mesure (2) en utilisation est déplacé dans une direction axiale (X) sur le premier joint (28') dans un mouvement rotatif, le procédé comprenant les étapes de :
- montage du dispositif de mesure (2) sur la première section de tige filetée (1') ;
- montage de la deuxième section de tige filetée (1'') sur la première section de tige filetée (1') ;
- déplacement du dispositif de mesure (2) vers le premier joint (28') jusqu'à ce que le filetage intérieur (33) du dispositif de mesure (2) vienne en butée contre le second filetage extérieur (35'') de la deuxième section de tige filetée (1") ;
- mise en rotation de la deuxième section de tige filetée (1") jusqu'à une position où une première entrée de filetage (30') dudit premier filetage extérieur (35') de la première section de tige filetée (1') correspond à une seconde entrée de filetage (30") dudit second filetage extérieur (35") de la deuxième section de tige filetée (1''), une position dans laquelle le dispositif de mesure (2) peut être déplacé sur le premier joint (28') ;
- verrouillage du premier joint (28') ;
- déplacement du dispositif de mesure (2) vers un second joint (28") entre la deuxième section de tige filetée (1") et une troisième section de tige filetée (1‴).

2. Procédé selon la revendication 1, dans lequel l'étape de verrouillage du premier joint (28') est suivie d'un déplacement du dispositif de mesure (2) vers la deuxième section de tige filetée (1").

3. Procédé selon la revendication 1 ou 2, dans lequel le dispositif de mesure (2) est déplacé sur le premier joint (28') par gravité et/ou à la main.

4. Procédé selon l'une quelconque des revendications 1 à 3, dans lequel l'étape de verrouillage du premier joint (28') comprend le montage d'au moins une broche (25) s'étendant transversalement à la direction axiale (X) dans un trou traversant correspondant d'une partie mâle et femelle (5, 7) respective pour verrouiller les sections de tige filetée (1', 1") l'une à l'autre.

5. Dispositif d'ascenseur (100) d'entraînement d'une cabine d'ascenseur (9), lequel dispositif d'ascenseur (100) comprend :
- un écrou d'entraînement d'ascenseur (12) ;
- un dispositif de mesure (2) ;
- une première et une deuxième sections de tige filetée (1', 1") agencées pour être vissées l'une à l'autre et formant un joint (28) ;
- la première section de tige filetée (1') étant munie d'une première extrémité de joint (3') présentant une broche de montage (15) s'étendant dans la direction de l'axe central (X),
- la broche de montage (15) est munie d'un filetage extérieur et la deuxième section de tige filetée (1") est munie d'une seconde extrémité de joint (3'') présentant un trou de montage (17) s'étendant dans la direction de l'axe central (X) ; et
- le trou de montage (17) présente à l'intérieur un filetage correspondant à celui de la broche de montage (15) ;
**caractérisé en ce que**
- le dispositif de mesure (2) présente un filetage intérieur (33) présentant un jeu par rapport au filetage extérieur (35) de chaque section de tige filetée (1', 1") inférieur à celui que le filetage intérieur de l'écrou d'entraînement d'ascenseur (12) présente par rapport au filetage extérieur (35) de chaque section de tige filetée (1', 1") ; dans lequel
- chaque section de tige filetée (1', 1") présente un filetage extérieur qui peut être défini comme un filetage non autobloquant ayant un angle d'inclinaison et une tolérance tels que le dispositif de mesure (2) peut être déplacé vers le bas par son propre poids le long des sections de tige filetée (1', 1") avec un mouvement de rotation au moyen de la gravité.

6. Dispositif (100) selon la revendication 5, dans lequel le dispositif de mesure (2) présente au moins une ou plusieurs entrées de filetage correspondant à un ou plusieurs filetages extérieurs (35) des première et deuxième sections de tige filetée (1', 1'') respectives.

7. Dispositif (100) selon la revendication 5 ou 6, dans lequel le dispositif de mesure (2) présente un angle d'inclinaison (S) du filetage intérieur (33) supérieur à cinq degrés.

8. Dispositif (100) selon l'une quelconque des revendications 5 à 7, dans lequel le dispositif de mesure (2) comprend un moyen de fixation (37) conçu pour fixer ou libérer le dispositif de mesure (2) de la section de tige filetée (1', 1") respective.
